# EUROPEAN PATENT APPLICATION

(11) **EP 4 472 295 A1**
(43) Date of publication of application: **04.12.2024**
(21) Application number: 22922790.5
(22) Date of filing: 28.01.2022
(51) Int. Cl.: H04W 48/12

(54) **NODE SETTING METHOD AND APPARATUS**

(71) Applicant: FUJITSU LIMITED, Kawasaki-shi, Kanagawa 211-8588 (JP)
(72) Inventor: YI, Su, Beijing 100022 (CN); ZHANG, Lei, Beijing 100022 (CN); JIA, Meiyi, Beijing 100022 (CN); LU, Yang, Beijing 100022 (CN)
(74) Representative: Haseltine Lake Kempner LLP
(86) International application number: PCT/CN2022/074636
(87) International publication number: WO 2023/141949

(57) **Abstract**

Embodiments of the present disclosure provide a setup method and apparatus for a node, the method including: a first unit of a first node sets a second unit of the first node via a signaling procedure between the first unit and a network device, the second unit being configured to forward a signal between a terminal equipment and the network device.

## Description

### FIELD

The present disclosure relates to the field of communications.

### BACKGROUND

Coverage problem is a fundamental problem in cellular network deployment. Mobile operators use different types of nodes in their deployments to provide complete coverage. A common full protocol stack cell deployment is certainly best, but it is not always feasible (e.g. no backhaul link) or economically feasible. Therefore, mobile operators consider using new types of nodes to increase the flexibility of network deployment. For example, 3GPP R16 and R17 introduce a new type of node that does not require wired backhaul, i.e., integrated access and backhaul (IAB). Another type of node is an RF repeater. The RF repeater is usually non-generative, and simply amplifies and forwards (AF) all received signals. The RF repeater has been widely deployed in 2G, 3G, and 4G to complement the coverage provided by a common full protocol stack cell.

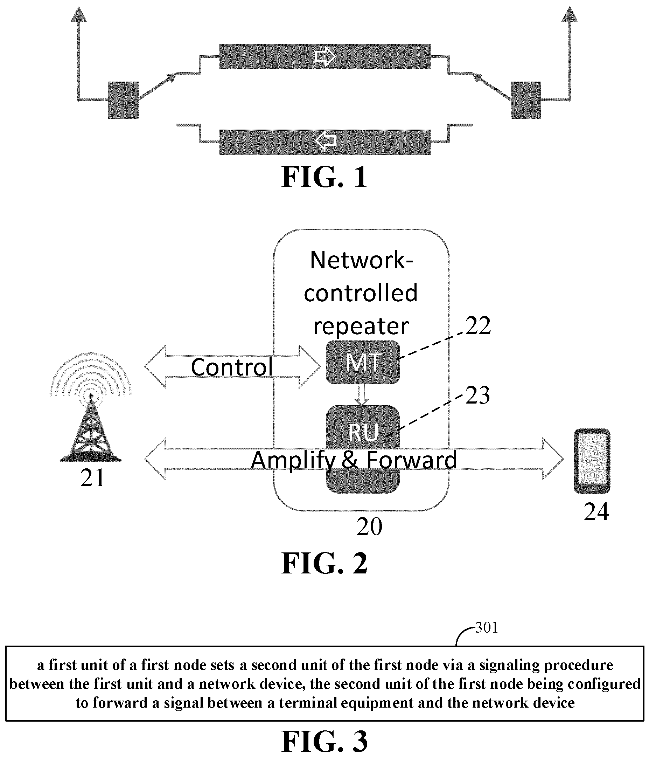

3GPP R17 introduces RF repeaters for New Radio (NR) to increase the coverage area of NR's cellular network deployment. FIG. 1 is a schematic diagram of a simple RF repeater. The RF repeater is usually full-duplex and cannot distinguish uplink and downlink transmissions. Its advantages include low cost, simple deployment, and no increase in latency. Its disadvantage is that it is possible to amplify noise together, thus increasing the interference on a signal.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY

The inventor finds that NR's RF repeaters regulate the demands on RF and electromagnetic compatibility (EMC), and also need to take into account frequency bands of FR1 (FDD (frequency division duplex) and TDD (Time division duplex)) and FR2 (TDD). The RF repeater does not need to perform adaptive beamforming on a UE. It does not take into account various factors that can improve performance, either. FR1 (Frequency range 1) and FR2 (frequency range 2) are frequency band ranges of 5G NR, corresponding to a low frequency band range and a high frequency band range respectively.

In order to optimize system performance, including possibly reducing interference and further improving coverage, a Network-Controlled Repeater (NC repeater, NCR, which may be also called a smart repeater) that has an ability of receiving and processing side control information from a network is proposed and is considered to be an effective scheme for improving network topology. It is regarded as an enhancement of a traditional RF repeater. However, in various states of the Network-Controlled Repeater, such as an initial state, a connected state, etc., how to set various configurations and functions of the Network-Controlled Repeater are not standardized.

For at least one of the above problems, embodiments of the present disclosure provide a setup method and apparatus for a node.

According to an aspect of the embodiments of the present disclosure, a setup apparatus for a node is provided, configured in a first node, the apparatus includes:
a first unit configured to set a second unit of the first node via a signaling procedure between the first unit and a network device; and
the second unit configured to forward a signal between a terminal equipment and the network device.

According to another aspect of the embodiments of the present disclosure, a setup apparatus for a node is provided, configured in a network device, the apparatus includes:
a transmitting unit configured to transmit a message related to setting of a second unit of a first node to a first unit via a signaling procedure between the first unit of the first node and the network device, so that the first unit of the first node sets the second unit of the first node via the signaling procedure.

One of the advantageous effects of the embodiments of the present disclosure lies in: according to the embodiments of the present disclosure, in a network where a first node is deployed, the second unit can be set effectively, which is conducive to the network device to control the second unit, so as to achieve network coverage enhancement and better serve users.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on these drawings under the premise that they do not pay inventive labor. In the drawings:
FIG. 1 is a schematic diagram of an RF repeater;
FIG. 2 is a structural schematic diagram of an example of a Network-Controlled Repeater;
FIG. 3 is a schematic diagram of a setup method for a node in the embodiments of the present disclosure;
FIG. 4 is a schematic diagram of a user plane protocol stack of a Network-Controlled Repeater;
FIG. 5 is a schematic diagram of a control plane protocol stack of a Network-Controlled Repeater;
FIG. 6 is a schematic diagram of an RRC procedure for reporting a capability of a second unit;
FIG. 7 is another schematic diagram of a setup method for a node in the embodiments of the present disclosure;
FIG. 8 is a schematic diagram of a setup apparatus for a node in the embodiments of the present disclosure;
FIG. 9 is another schematic diagram of a setup apparatus for a node in the embodiments of the present disclosure;
FIG. 10 is a schematic diagram of a node in the embodiments of the present disclosure;
FIG. 11 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to...... ", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future. In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "a cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

FIG. 2 is a structural schematic diagram of an example of a Network-Controlled Repeater. As shown in FIG. 2, the Network-Controlled Repeater 20 may be divided into two parts, one part is used to realize some functions of a UE and communicate with the gNB 21, this part may be called a mobile termination (MT) 22, but the present disclosure is not limited to this, it may also be named in other ways. The other part realizes a radio frequency function, that is, an amplification and forwarding function of the repeater, this part may be called a radio unit (RU) 23, but the present disclosure is not limited to this, similar to MT, it may also be named in other ways.

As shown in FIG. 2, the link between the gNB 21 and the MT 22 is a control link or control path, and also a fronthaul link. Through this control link, the gNB 21 may configure the Network-Controlled Repeater 20 via side control information such as TDD configuration, switching information, RU beamforming information, etc. The control link may be based on an existing Uu interface. The MT 22 applies these configuration information to the RU (that is, an AF module) 23 through internal operations of the Network-Controlled Repeater 20. Side control means that a network device (gNB 21) is intended to control the RU 23, but there is no direct interface between the network device (gNB 21) and the RU 23, so the network device (gNB 21) realizes control of the RU 23 through a control interface with the MT 22.

As shown in FIG. 2, an access link from the gNB 21 to the ordinary UE 24 undergoes signal amplification and forwarding by the Network-Controlled Repeater 20, so it is called an AF link, or may also be called a data path. The Network-Controlled Repeater 20 is transparent to the UE 24, the UE 24 may not be aware of the existence of the Network-Controlled Repeater 20. The data path (e.g. using an FR2 frequency band) carries an analog uplink/downlink signal from or to the UE 24. The data path is essentially an analog signal pass through. The data path is completely controlled by the gNB 21 (or a distributed unit (DU)) through the control path.

The inventor finds that the main advantages of the Network-Controlled Repeater lie in: a simpler protocol stack and network integration than traditional relay, integrated access and backhaul-distributed unit (IAB-DU) and gNB; more efficient AF operations achieved through side control of the gNB, such as dynamically changing TX/RX (transmission and reception states) of the repeater so as to reduce unnecessary noise amplification, as well as achieve transmission and reception with better spatial directivity.

In addition, for the Network-Controlled Repeater, possible technical directions are: side control information design content includes basic designs such as beamforming information configuration, timing, TDD configuration; designs of other aspects, including transceiver switching (on-off), bandwidth information, power control, same frequency-related issues or radio frequency demands, etc.; research and confirmation of signaling and configuration used to carry side control information; in addition to the side control information, management of the Network-Controlled Repeater also needs to be standardized, including e.g. authentication/authorization and interference management, etc.

However, as described above, in various states of the Network-Controlled Repeater, such as an initial state, a connected state, etc., how to set various configurations and functions of the Network-Controlled Repeater are not standardized.

Various implementations of the present disclosure will be described below with reference to the drawings. These implementations are exemplary only and are not limitations to the present disclosure.

In the embodiments of the present disclosure, for convenience of description, a node deployed in a network to improve network coverage or improve user performance is called a first node, which may be the aforementioned Network-Controlled Repeater 20 or a smart repeater (SR), it may also be a reconfigurable intelligent surface (RIS), etc., the present disclosure has no restriction on its name. Moreover, for convenience of description, a unit that implements the above MT function in the first node is called a first unit, and a unit that implements the above RU function in the first node is called a second unit.

### Embodiments of a first aspect

Embodiments of the present disclosure provide a setup method for a node, which is described from a first node side. Setup here includes configuring, activating, capability reporting, etc.

FIG. 3 is a schematic diagram of a setup method for a node in the embodiments of the present disclosure, referring to FIG. 3, the method includes:
301: a first unit of a first node sets a second unit of the first node via a signaling procedure between the first unit and a network device, the second unit of the first node being configured to forward a signal between a terminal equipment and the network device.

In the embodiments of the present disclosure, as described above, the first node includes a first unit and a second unit, the first unit sets the second unit via a signaling procedure between the first unit and the network device, such as processes of setting a default parameter, reporting a capability, starting or ending work, etc., which is conducive to the control of the network device over the second unit, thereby to achieve network coverage enhancement and better serve users.

In the embodiments of the present disclosure, the first unit and the second unit may be two unit collocated in the first node, as shown in FIG. 2. However, the present disclosure is not limited to this, for example, the second unit may further be an individual entity in the first node. For example, in an entire network, the first node, as a special UE, performs access and radio resource control (RRC) connection management according to traditional UE behaviors, while the second unit does not act as a collocated part, but as an entity inside the UE, and is used to amplify and forward a radio frequency signal.

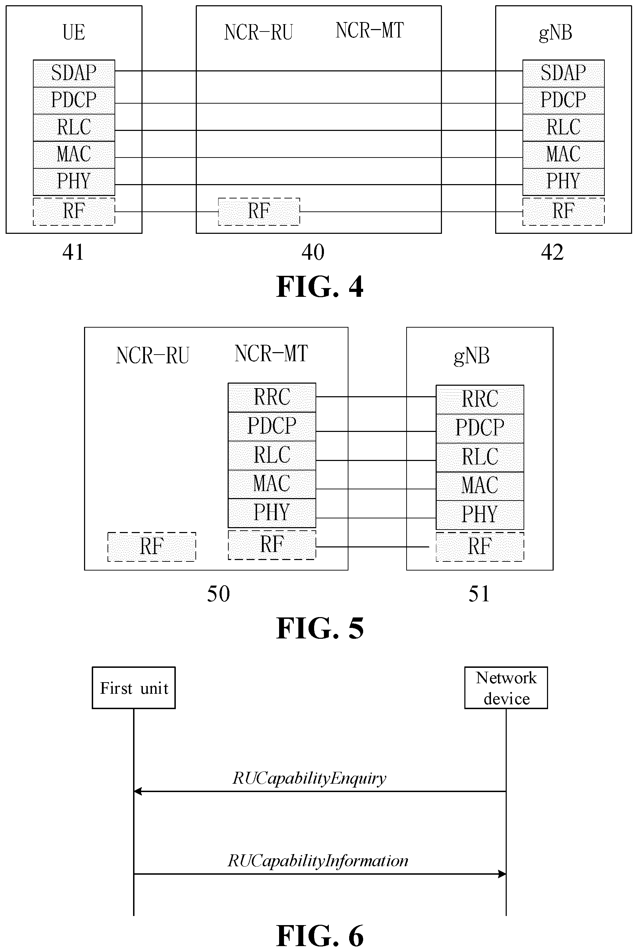

In the embodiments of the present disclosure, a user plane of the first node only involves the second unit. FIG. 4 is a schematic diagram of a user plane protocol stack of a network-controlled repeater 40. As shown in FIG. 4, a radio frequency module RF of the RU part (that is, the second unit mentioned above) acts as an amplifier to forward an analog uplink signal from UE 41 to gNB 42, or to forward an analog downlink signal transmitted by gNB 42 to UE 41 to UE 41.

In the embodiments of the present disclosure, a control plane protocol stack exists between the network device and the first unit, the control plane protocol stack is also called a control plane protocol stack of the first unit or a control plane protocol stack between the first unit and the network device, the second unit has no control plane protocol stack. In one embodiment, the control plane protocol stack between the first unit and the network device reuses a current control plane protocol stack between the network device and a UE, including a physical layer, a Media Access Control (MAC) layer, a Radio Link Control (RCL) layer, a Packet Data Convergence Protocol (PDCP) layer and an RRC layer. FIG. 5 is a schematic diagram of a control plane protocol stack of a Network-Controlled Repeater 50, as shown in FIG. 5, a MT (i.e., the above mentioned first unit) is managed and controlled via RRC/PDCP/RLC/MAC/PHY layer protocols from top to bottom, and a Uu interface in related arts may be used between gNB 51 and the MT. The MT then manages and configures the RU (that is, the above mentioned second unit) internally according to the configuration or indication of gNB 51, so that the RU realizes the efficient amplification and forwarding work of the user plane, which realizes the network-controlled relay function.

In some embodiments, the control plane protocol stack of the first unit further includes a Non-Access Stratum (NAS) protocol layer (not shown in FIG. 5), the NAS layer is located above the RRC layer, is terminated at the NAS layer of an Access and Mobility management Function (AMF) in a core network via gNB 51, and performs functions such as authentication, mobility management or security control on the first node via the core network.

In the embodiments of the present disclosure, regarding the signaling procedure between the first unit and the network device, in some embodiments, the first unit of the first node may support an RRC procedure of a traditional UE, and on this basis, performs enhancement, the first unit may set the second unit via the RRC procedure between the first unit and the network device.

In one example, an RRC connection establishment procedure for the second unit may be enhanced. That is, the first unit performs at least one of the following steps when it performs RRC establishment initialization:
applying a default layer 1 parameter value except for a parameter value provided in SIB 1 for the second unit;
applying a parameter *timeAlignmentTimerCommon* included in SIB 1 for the second unit; and
when the first unit receives an RRC setup *(RRCSetup)* message, performing a configuration procedure for the second unit according to received related configuration of the second unit.

In this example, the layer 1 parameter may include a frequency point, a bandwidth, an on-off mode, antenna beam configuration, transmit power, reference signal configuration, etc., of the second unit.

In this example, the parameter *timeAlignmentTimerCommon* is a cell-level timer configured to control how long a terminal equipment is considered to be uplink time alignment, relevant technologies may be referred to for details, description is omitted here.

In this example, related configuration of the second unit for example may be indicated by adding a new IE to the RRC setup message, the new IE e.g. is ncr-Config, but the present disclosure is not limited to this, for example, the related configuration of the second unit may also be indicated by multiplexing an existing IE in the RRC setup message or through other modes.

In this example, the related configuration of the second unit includes a semi-static parameter configured for the second unit, which may include at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

The on-off mode is used for efficient interference management and energy saving, for example, including a period of the on-off mode, a duration of "on" in the period, etc. The beamforming capability is target beam information, such as beam information from a TRP to a NCR link and/or beam information from a NCR to a UE link, etc. The power and/or gain control information is used for efficient interference management, for example may be gain control information per carrier frequency or per bandwidth part (BWP), etc. The bandwidth information, for example, may be a bandwidth and center frequency point, etc. of a pass band/carrier frequency/BWP. The layer 2/layer 3 configuration of the first node e.g. is an identifier, an IP address, identification and authorization related information, etc. of the first node or the first unit.

In another example, an RRC connection re-establishment procedure for the first unit may be enhanced. That is, the first unit performs at least one of the following steps after cell selection and when a T311 timer is running:
applying a default layer 1 parameter value except for a parameter value provided in SIB 1 for the second unit; and
applying a parameter *timeAlignmentTimerCommon* included in SIB 1 for the second unit.

In this example, the meanings of the layer 1 parameter and the parameter *timeAlignmentTimerCommon* are the same as those in the preceding text, description is omitted here. Moreover, TS38.331 may be referred to for a specific definition and operation of the T311 timer.

In another example, an RRC reconfiguration procedure for the first unit may be enhanced. That is, when the first unit receives an RRC reconfiguration (*RRCReconfiguration*) message, the first unit performs the following step:
performing a configuration procedure for the second unit according to received related configuration of the second unit.

In this example, the meaning of the related configuration of the second unit is same as that in the preceding text, description is omitted here.

In a further example, an RRC connection resume procedure for the first unit may be enhanced.

For example, the first unit performs at least one of the following steps when it performs RRC connection recovery initialization:
applying a default layer 1 parameter value except for a parameter value provided in SIB 1 for the second unit; and
applying a parameter *timeAlignmentTimerCommon* included in SIB 1 for the second unit.

In this example, the meanings of the layer 1 parameter and the parameter *timeAlignmentTimerCommon* are the same as those in the preceding text, description is omitted here.

For another example, the first unit performs at least one of the following steps when it receives an RRC resume (*RRCResume*) message:
if the related configuration of the second unit is stored, restoring the related configuration of the second unit from a UE inactive access stratum context (UE Inactive AS context);
if the RRC resume message includes the related configuration of the second unit, performing the configuration procedure for the second unit according to the received related configuration of the second unit.

In this example, the meaning of the related configuration of the second unit is same as that in the preceding text, description is omitted here.

The above makes a description only by taking "the first unit configures the second unit via an RRC procedure between the first unit and the network device" as an example, however the present disclosure is not limited to this, the first unit may further set the second unit via other signaling procedure between the first unit and the network device, its principle and implementation are similar to the above embodiments, description is omitted here.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

In the embodiments of the present disclosure, in some embodiments, the first unit may further report a capability of the second unit to a network device.

In some embodiments, a new RRC procedure, such as called a second unit capability transfer procedure for example, may be added to report a capability of the second unit. For example, the first unit receives a message (called a first message) transmitted by the network device and used to inquire about the capability of the second unit, and transmits a message (called a second message) including capability information of the second unit to the network device. When the first unit receives the message from the network device and used to inquire about the capability of the second unit, the first unit edits capability information of the second unit and transfer it to a network.

FIG. 6 is a schematic diagram of an RRC procedure for reporting a capability of a second unit. As shown in FIG. 6, when the network device needs (more) information about radio range capability of the second unit of the first node, it may initiate the second unit capability transfer procedure, that is, transmitting an RRC message, such as called RUCapabilityEnquiry message, to the first unit. After receiving the message, the first unit edits a reply message, such as called RUCapabilityInformation message, according to the content of the message. The reply message may include a radio capability parameter of the second unit, such as supported passband bandwidth or bandwidth combination information, TDD or FDD capability information, multi-antenna MIMO capability information, etc.

In some other embodiments, a capability of the second unit may be reported by enhancing an existing RRC capability transfer procedure. For example, the first unit receives a third message transmitted by the network device and including an IE for inquiring about the capability of the second unit, and transmits a fourth message including an IE for indicating the capability of the second unit to the network device. That is, existing UE capability transfer procedure and messages are reused. An IE specific to the second unit is added in the messages. For example, an IE for inquiring about the capability of the second unit is added in the UECapabilityEnquiry message, such as called ru-Capability-Request; an IE for reporting the capability of the second unit is added in the UECapabilityInformation message, such as called RU-Capability, used to convey a radio access capability parameter of the second unit, such as a physical layer and an RF parameter. For the contents related to said UECapabilityEnquiry message and UECapabilityInformation message, relevant technologies may be referred to, description is omitted here.

In the embodiments of the present disclosure, in some embodiments, the second unit of the first node (i.e., an amplifier part of the first node) may start to operate according to configuration on the second unit by the first unit (the related configuration of the second unit as described above), in the following situations:
when the first unit receives the RRC setup (RRCSetup) message and configures the second unit;
after access stratum security of the first unit is activated;
when the first unit receives an RRC resume (*RRCResume*) message;
the first unit restores the related configuration of the second unit;
after the first unit enters an RRC connected state;
the RRC reconfiguration (RRCReconfiguration) message received by the first unit includes the related configuration of the second unit;
the related configuration of the second unit includes bandwidth configuration;
the first unit has performed synchronization reconfiguration (reconfiguration with sync).

In the above embodiments, the meaning of the related configuration of the second unit has been described in the preceding text, its contents are incorporated here, description thereof is omitted here.

In the above embodiments, in a case where the RRC reconfiguration (RRCReconfiguration) message includes the related configuration of the second unit or the related configuration of the second unit includes bandwidth configuration or the first unit has performed synchronization reconfiguration (reconfiguration with sync), the second unit stops operating first, and then restarts operating according to the related configuration of the second unit in the RRC reconfiguration message, that is, stops operating first, and then restarts operating or reworks or reactivates.

In the above embodiments, in a case where the first unit and the second unit are two collocated units, start to operate means activating or reactivating or enabling the second unit; or, in a case where the second unit is an individual entity in the first node, start to operate means starting or creating or activating a second unit entity.

In the embodiments of the present disclosure, in some embodiments, the second unit of the first node (i.e., an amplifier part of the first node) may stop operating in the following situations:
when the first unit enters an RRC idle state;
the RRC reconfiguration message (RRCReconfiguration) received by the first unit includes the related configuration of the second unit, or the related configuration of the second unit includes the bandwidth configuration;
the first unit has performed synchronization reconfiguration (reconfiguration with sync);
when the first unit performs initialization of RRC connection re-establishment;
an RRC release (RRCRelease) message received by the first unit includes suspending configuration (suspendConfig).

In the above embodiments, the meaning of the related configuration of the second unit has been described in the preceding text, its contents are incorporated here, description thereof is omitted here.

In the above embodiments, in a case where the first unit and the second unit are two collocated units, stop operating means deactivating or disabling the second unit; or, in a case where the second unit is an individual entity in the first node, stop operating means releasing or deactivating a second unit entity.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, the second unit can be set effectively, which is conducive to the network device to control the second unit, so as to achieve network coverage enhancement and better serve users.

### Embodiments of a second aspect

Embodiments of the present disclosure provide a setup method for a node, which is described from a network device side. The contents same as the embodiments of the first aspect are not repeated again.

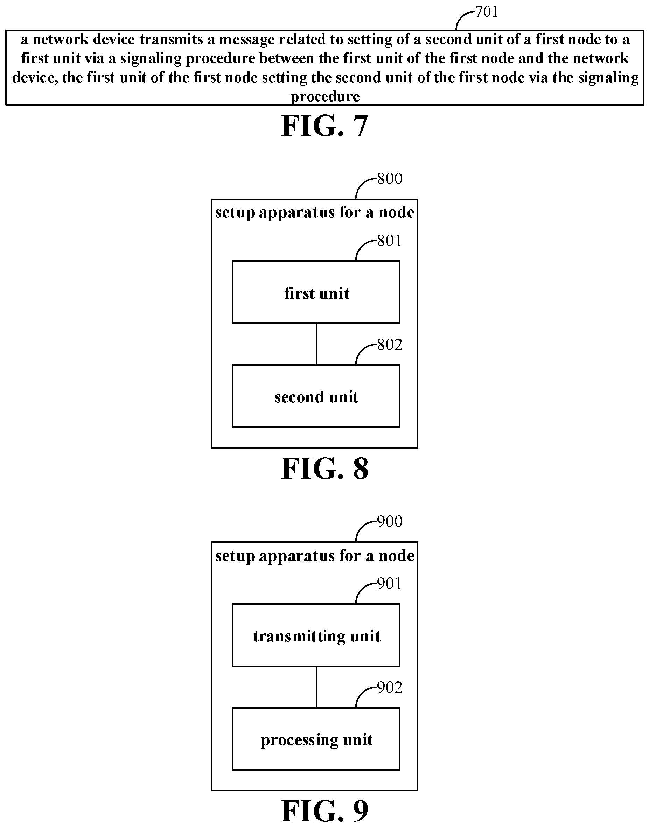

FIG. 7 is a schematic diagram of a setup method for a node in the embodiments of the present disclosure, as shown in FIG. 7, the method includes:
701: a network device transmits a message related to setting of a second unit of a first node to a first unit via a signaling procedure between the first unit of the first node and the network device, the first unit of the first node setting the second unit of the first node via the signaling procedure (i.e., according to the message).

In some embodiments, the network device transmits a message related to setting of a second unit of a first node to a first unit via a radio resource control (RRC) procedure between the first unit of the first node and the network device, so that the first unit of the first node sets the second unit of the first node via the RRC procedure.

In some embodiments, the message related to the setting of the second unit of the first node is an SIB 1 message, the network device providing a layer 1 parameter value of the second unit via the SIB 1 message. Thereby, the first unit may apply a layer 1 parameter and a parameter *timeAlignmentTimerCommon* for the second unit included in SIB 1 for the second unit.

In some embodiments, the message related to setting of a second unit of a first node is an RRC setup (*RRCSetup*) message, the RRC setup (*RRCSetup*) message including the related configuration (such as ncr-Config) of the second unit. Thereby, the first unit may perform a configuration procedure for the second unit according to the related configuration of the second unit.

In some embodiments, the message related to setting of a second unit of a first node is an RRC reconfiguration message, the RRC reconfiguration message including the related configuration of the second unit. Thereby, the first unit may perform a configuration procedure for the second unit according to the related configuration of the second unit.

In some embodiments, the message related to setting of a second unit of a first node is an RRC resume message, the RRC resume message including the related configuration of the second unit. Thereby, the first unit may perform a configuration procedure for the second unit according to the related configuration of the second unit.

In the above each embodiment, the related configuration of the second unit includes at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

In some embodiments, the network device may further receive a capability of the second unit reported by the first unit.

For example, the network device transmits a first message (such as the aforementioned RUCapabilityEnquiry message) to the first unit, the first message is used to inquire about a capability of the second unit; the network device receives a second message (such as the aforementioned RUCapabilityInformation message) transmitted by the first unit, the second message includes capability information of the second unit.

For another example, the network device transmits a third message (such as the aforementioned UECapabilityEnquiry message) to the first unit, the third message includes an IE (such as the aforementioned ru-Capability-Request) for inquiring about a capability of the second unit; the network device receives a fourth message (such as the aforementioned UECapabilityInformation message) transmitted by the first unit, the fourth message includes an IE (such as the aforementioned RU-Capability) for indicating a capability of the second unit.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, the second unit can be set effectively, which is conducive to the network device to control the second unit, so as to achieve network coverage enhancement and better serve users.

### Embodiments of a third aspect

The embodiments of the present disclosure provide a setup apparatus for a node, the apparatus may, for example, be a first node deployed in a network, or may be one or more parts or components configured in the first node. The first node may be a network-controlled repeater, or may be an intelligent repeater or a reconfigurable intelligent transmitting surface. The principle of the apparatus to solve the problem is same as the method in the embodiments of the first aspect, thus its specific implementation can refer to the implementation of the method in the embodiments of the first aspect, the same contents will not be repeated.

FIG. 8 is a schematic diagram of a setup apparatus for a node in the embodiments of the present disclosure, as shown in FIG. 8, the setup apparatus 800 for a node in the embodiments of the present disclosure includes a first unit 801 and a second unit 802. The first unit 801 is configured to set the second unit 802 of the first node via a signaling procedure between the first unit 801 and a network device; the second unit 802 is configured to forward a signal between a terminal equipment and the network device.

In some embodiments, the first unit 801 and the second unit 802 are two collocated units in the first node, or the second unit 802 is an individual entity in the first node.

In some embodiments, a control plane protocol stack of the first unit 801 includes: a physical layer, a MAC layer, an RLC layer, a PDCP layer and an RRC layer.

In the above embodiments, the control plane protocol stack of the first unit 801 further includes a NAS layer, which is located above the RRC layer.

In some embodiments, the first unit 801 sets the second unit 802 via a radio resource control (RRC) procedure between the first unit 801 and the network device.

For example, the first unit 801 performs at least one of the following steps when it performs RRC establishment initialization:
applying a default layer 1 parameter value except for a parameter value provided in SIB1 for the second unit 802;
applying a parameter *timeAlignmentTimerCommon* included in SIB 1 for the second unit 802;
when the first unit 801 receives an RRC setup (*RRCSetup*) message, performing a configuration procedure for the second unit 802 according to received related configuration (such as ncr-Config) of the second unit.

For another example, the first unit 801 performs at least one of the following steps after cell selection and when a T311 timer is running:
applying a default layer 1 parameter value except for a parameter value provided in SIB1 for the second unit 802;
applying a parameter *timeAlignmentTimerCommon* included in SIB 1 for the second unit 802.

For another example, the first unit 801 performs the following step when it receives an RRC reconfiguration (*RRCReconfiguration*) message:
performing a configuration procedure for the second unit 802 according to received related configuration of the second unit.

For another example, the first unit 801 performs at least one of the following steps when it performs RRC connection recovery initialization:
applying a default layer 1 parameter value except for a parameter value provided in SIB1 for the second unit 802;
applying a parameter *timeAlignmentTimerCommon* included in SIB 1 for the second unit 802.

For another example, the first unit 801 performs at least one of the following steps when it receives an RRC resume (RRCResume) message:
if the related configuration of the second unit is stored, restoring the related configuration of the second unit from a UE inactive access stratum context (UE Inactive AS context);
if the RRC resume message includes the related configuration of the second unit, performing the configuration procedure for the second unit 802 according to the received related configuration of the second unit.

In the above each embodiment, the related configuration of the second unit includes at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

In some embodiments, the first unit 801 may further report a capability of the second unit 802 to a network device.

For example, the first unit 801 receives a first message transmitted by the network device, the first message is used to inquire about a capability of the second unit 802; the first unit 801 transmits a second message to the network device, the second message includes capability information of the second unit 802.

For another example, the first unit 801 receives a third message transmitted by the network device, the third message includes an IE for inquiring about a capability of the second unit 802; the first unit 801 transmits a fourth message to the network device, the fourth message includes an IE for indicating a capability of the second unit 802.

In some embodiments, the second unit 802 starts to operate in a case where at least one of the following situations is satisfied:
when the first unit 801 receives the RRC setup (RRCSetup) message and configures the second unit 802;
access stratum security of the first unit 801 is activated;
the first unit 801 receives an RRC resume (RRCResume) message;
the first unit 801 restores the related configuration of the second unit;
the first unit 801 enters an RRC connected state;
the RRC reconfiguration (RRCReconfiguration) message received by the first unit 801 includes the related configuration of the second unit;
the related configuration of the second unit includes bandwidth configuration;
the first unit 801 has performed synchronization reconfiguration (reconfiguration with sync).

In the above embodiments, start to operate means activating or reactivating or enabling the second unit, or, start to operate means starting or creating or activating a second unit entity.

In the above embodiments, in a case where the RRC reconfiguration (RRCReconfiguration) message includes the related configuration of the second unit or the related configuration of the second unit includes bandwidth configuration or the first unit 801 has performed synchronization reconfiguration (reconfiguration with sync), the second unit 802 stops operating first, and then restarts operating according to the RRC reconfiguration message.

In some embodiments, the second unit 802 stops operating in a case where at least one of the following situations is satisfied:
the first unit 801 enters an RRC idle state;
the RRC reconfiguration message (RRCReconfiguration) received by the first unit 801 includes the related configuration of the second unit, or the related configuration of the second unit includes the bandwidth configuration;
the first unit 801 has performed synchronization reconfiguration (reconfiguration with sync);
the first unit 801 performs initialization of RRC connection re-establishment;
an RRC release (RRCRelease) message received by the first unit 801 includes suspending configuration (suspendConfig).

In the above embodiments, stop operating means deactivating or disabling the second unit, or, stop operating means releasing or deactivating a second unit entity.

The embodiments of the present disclosure further provide a setup apparatus for a node, the apparatus for example may be a network device, or may also be one or more parts or components configured in the network device. The principle of the apparatus to solve the problem is same as the method in the embodiments of the second aspect, thus its specific implementation can refer to the implementation of the method in the embodiments of the second aspect, the same contents will not be repeated.

FIG. 9 is a schematic diagram of a setup apparatus for a node in the embodiments of the present disclosure, as shown in FIG. 9, the apparatus includes:
a transmitting unit 901 configured to transmit a message related to setting of a second unit of a first node to a first unit via a signaling procedure between the first unit of the first node and the network device, the first unit of the first node setting the second unit of the first node via the signaling procedure.

In some embodiments, the transmitting unit 901 transmits a message related to setting of a second unit of a first node to a first unit via a radio resource control (RRC) procedure between the first unit of the first node and the network device, and the first unit of the first node sets the second unit of the first node via the RRC procedure.

For example, the message related to the setting of the second unit of the first node is an SIB1 message, and the network device provides a layer 1 parameter value of the second unit via the SIB1 message.

For another example, the message related to setting of a second unit of a first node is an RRC setup (*RRCSetup*) message, and the RRC setup *(RRCSetup)* message includes the related configuration (such as ncr-Config) of the second unit.

For another example, the message related to setting of a second unit of a first node is an RRC reconfiguration message, and the RRC reconfiguration message includes the related configuration of the second unit.

For a further example, the message related to setting of a second unit of a first node is an RRC resume message, and the RRC resume message includes the related configuration of the second unit.

In the above each embodiment, the related configuration of the second unit includes at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

In some embodiments, as shown in FIG. 9, the apparatus 900 further includes:
a processing unit 902 configured to receive a capability of the second unit reported by the first unit.

For example, the processing unit 902 transmits a first message to the first unit, the first message is used to inquire about a capability of the second unit; the processing unit 902 receives a second message transmitted by the first unit, the second message includes capability information of the second unit.

For another example, the processing unit 902 transmits a third message to the first unit, the third message includes an IE for inquiring about a capability of the second unit; the processing unit 902 receives a fourth message transmitted by the first unit, the fourth message includes an IE for indicating a capability of the second unit.

It's worth noting that the above only describes components or modules related to the present disclosure, but the present disclosure is not limited to this. The apparatuses 800, 900 in the embodiments of the present disclosure may further include other components or modules. For detailed contents of these components or modules, relevant technologies can be referred to.

Moreover, for the sake of simplicity, FIG. 8 and FIG. 9 only exemplarily show a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

According to the apparatus in the embodiments of the present disclosure, in a network where a first node is deployed, the second unit can be set effectively, which is conducive to the network device to control the second unit, so as to achieve network coverage enhancement and better serve users.

### Embodiments of a fourth aspect

The embodiments of the present disclosure provide a communication system, including a terminal equipment, a network device and a node, the node is configured to perform the method described in the embodiments of the first aspect, and/or the network device is configured to perform the method described in the embodiments of the second aspect. Behaviors of the node and the network device have been described in detail in the embodiments of the first and second aspects, whose contents are incorporated here and will not be repeated here. The present disclosure does not restrict behaviors of the terminal equipment.

The embodiments of the present disclosure further provide a node, which includes the setup apparatus 800 for a node in the embodiments of the third aspect. The node may be a network-controlled repeater (NCR), or a smart repeater (SR) or a reconfigurable intelligent transmitting surface (RIS).

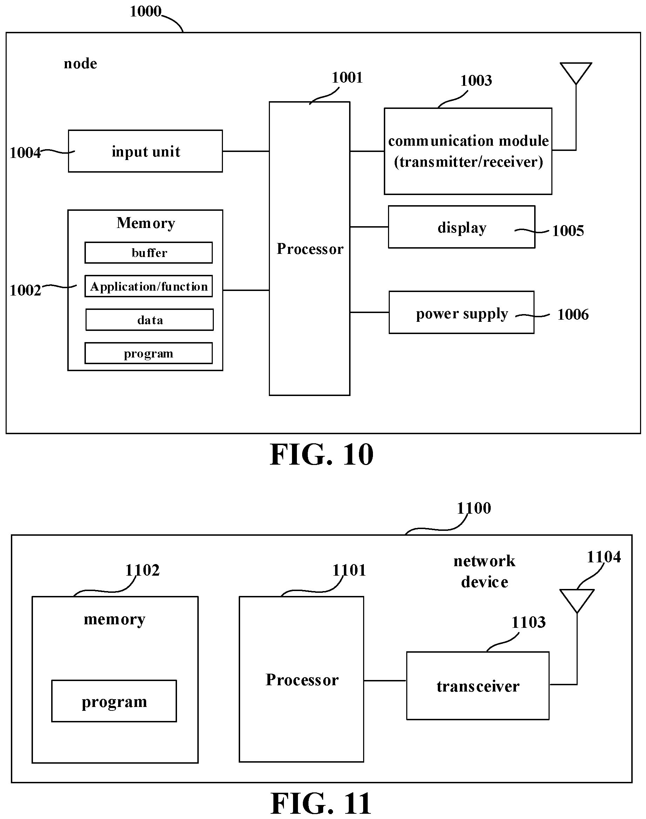

FIG. 10 is a schematic diagram of a node in the embodiments of the present disclosure. As shown in FIG. 10, the node 1000 may include a processor 1001 and a memory 1002; the memory 1002 stores data and programs, and is coupled to the processor 1001. It's worth noting that this figure is exemplary; other types of structures can also be used to supplement or replace this structure, so as to realize a telecommunication function or other functions.

For example, the processor 1001 can be configured to execute a program to implement the method as described in the embodiments of the first aspect.

As shown in FIG. 10, the node 1000 may further include: a communication module 1003, an input unit 1004, a display 1005 and a power supply 1006. The functions of said components are similar to related arts, which are not repeated here. It's worth noting that the node 1000 does not have to include all the components shown in FIG. 10, said components are not indispensable. Moreover, the node 1000 may also include components not shown in FIG. 10, related arts can be referred to.

The embodiments of the present disclosure further provide a network device, which includes the setup apparatus 900 for a node in the embodiments of the fourth aspect.

FIG. 11 is a schematic diagram of a network device in the embodiments of the present disclosure. As shown in FIG. 11, the network device 1100 may include: a central processing unit (CPU)1101 and a memory 1102; the memory 1102 is coupled to the central processing unit 1101. The memory 1102 may store various data; moreover, also stores a program for information processing, and executes the program under the control of the processor 1101, so as to receive various information transmitted by the terminal equipment and transmit various information to the terminal equipment.

For example, the processor 1101 can be configured to execute a program to implement the method as described in the embodiments of the second aspect.

In addition, as shown in FIG. 11, the network device 1100 may further include: a transceiver 1103 and an antenna 1104, etc.; wherein the functions of said components are similar to relevant arts, which are not repeated here. It's worth noting that the network device 1100 does not have to include all the components shown in FIG. 11. Moreover, the network device 1100 may also include components not shown in FIG. 11, relevant arts can be referred to.

The embodiments of the present disclosure further provide a computer readable program, wherein when the program is executed in a node, the program enables a computer to execute the method as described in the embodiments of the first aspect, in the node.

The embodiments of the present disclosure further provide a storage medium in which a computer readable program is stored, wherein the computer readable program enables a computer to execute the method as described in the embodiments of the first aspect, in a node.

The embodiments of the present disclosure further provide a computer readable program, wherein when a network device executes the program, the program enables a computer in the network device to execute the method described in the embodiments of the second aspect.

The embodiments of the present disclosure further provide a storage medium in which a computer readable program is stored, wherein the computer readable program enables a computer to execute the method as described in the embodiments of the second aspect, in a network device.

The apparatus and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A setup method for a node, wherein the method includes:
   a first unit of a first node sets a second unit of the first node via a signaling procedure between the first unit and a network device, the second unit being configured to forward a signal between a terminal equipment and the network device.
2. The method according to Supplement 1, wherein the first unit of the first node sets the second unit of the first node via a radio resource control (RRC) procedure between the first unit and the network device.
3. The method according to Supplement 2, wherein the first unit of the first node sets the second unit of the first node via the RRC procedure, including:
   the first unit performs at least one of the following steps when it performs RRC establishment initialization:
   applying a default layer 1 parameter value except for a parameter value provided in SIB 1 for the second unit; and
   applying a parameter *timeAlignmentTimerCommon* included in SIB 1 for the second unit; and
   when the first unit receives an RRC setup *(RRCSetup)* message, performing a configuration procedure for the second unit according to received related configuration (such as ncr-Config) of the second unit.
4. The method according to Supplement 2, wherein the first unit of the first node sets the second unit of the first node via the RRC procedure, including:
   the first unit performs at least one of the following steps after cell selection and when a T311 timer is running:
   applying a default layer 1 parameter value except for a parameter value provided in SIB 1 for the second unit; and
   applying a parameter *timeAlignmentTimerCommon* included in SIB 1 for the second unit.
5. The method according to Supplement 2, wherein the first unit of the first node sets the second unit of the first node via the RRC procedure, including:
   the first unit performs the following step when it receives an RRC reconfiguration (*RRCReconfiguration*) message:
   performing a configuration procedure for the second unit according to received related configuration of the second unit.
6. The method according to Supplement 2, wherein the first unit of the first node sets the second unit of the first node via the RRC procedure, including:
   the first unit performs at least one of the following steps when it performs RRC connection recovery initialization:
   applying a default layer 1 parameter value except for a parameter value provided in SIB 1 for the second unit; and
   applying a parameter *timeAlignmentTimerCommon* included in SIB 1 for the second unit.
7. The method according to Supplement 2, wherein the first unit of the first node sets the second unit of the first node via the RRC procedure, including:
   the first unit performs at least one of the following steps when it receives an RRC resume (RRCResume) message:
   if the related configuration of the second unit is stored, restoring the related configuration of the second unit from a UE inactive access stratum context (UE Inactive AS context);
   if the RRC resume message includes the related configuration of the second unit, performing the configuration procedure for the second unit according to the received related configuration of the second unit.
8. The method according to Supplement 3, 5 or 7, wherein the related configuration of the second unit includes at least one of the following:
   an on-off mode;
   timing information for aligning transmission and/or reception boundaries;
   a beamforming capability;
   power and/or gain control information;
   bandwidth information;
   reference signal configuration for the second unit;
   reference signal transmit power for the second unit; and
   layer 2 and/or layer 3 configuration of the first node.
9. The method according to any one of Supplements 1 to 8, wherein, the method further includes:
   the first unit reports a capability of the second unit to the network device.
10. The method according to Supplement 9, wherein the first unit reports a capability of the second unit to the network device, including:
   the first unit receives a first message transmitted by the network device, the first message being used to inquire about the capability of the second unit; and
   the first unit transmits a second message to the network device, the second message including capability information of the second unit.
11. The method according to Supplement 9, wherein the first unit reports a capability of the second unit to the network device, including:
   the first unit receives a third message transmitted by the network device, the third message including an IE for inquiring about the capability of the second unit; and
   the first unit transmits a fourth message to the network device, the fourth message including an IE for indicating the capability of the second unit.
12. The method according to any one of Supplements 1 to 11, wherein the method further includes:
   the second unit starts to operate in a case where at least one of the following situations is satisfied:
   when the first unit receives the RRC setup (RRCSetup) message and configures the second unit;
   access stratum security of the first unit is activated;
   the first unit receives an RRC resume (RRCResume) message;
   the first unit resumes the related configuration of the second unit;
   the first unit enters an RRC connected state;
   the RRC reconfiguration (RRCReconfiguration) message received by the first unit includes the related configuration of the second unit;
   the related configuration of the second unit includes bandwidth configuration;
   the first unit has performed synchronization reconfiguration (reconfiguration with sync).
13. The method according to Supplement 12, wherein the start to operate means activating or reactivating or enabling the second unit, or, the start to operate means starting or creating or activating a second unit entity.
14. The method according to Supplement 12, wherein in a case where the RRC reconfiguration (RRCReconfiguration) message includes the related configuration of the second unit or the related configuration of the second unit includes bandwidth configuration or the first unit has performed synchronization reconfiguration (reconfiguration with sync), the second unit stops operating first, and then restarts operating according to the RRC reconfiguration message.
15. The method according to any one of Supplements 1 to 14, wherein the method further includes:
   the second unit stops operating in a case where at least one of the following situations is satisfied:
   the first unit enters an RRC idle state;
   the RRC reconfiguration (RRCReconfiguration) message received by the first unit includes the related configuration of the second unit, or the related configuration of the second unit includes the bandwidth configuration;
   the first unit has performed synchronization reconfiguration (reconfiguration with sync);
   the first unit performs initialization of RRC connection re-establishment;
   an RRC release (RRCRelease) message received by the first unit includes suspending configuration (suspendConfig).
16. The method according to Supplement 15, wherein the stop operating means deactivating or disabling the second unit, or, the stop operating means releasing or deactivating a second unit entity.
17. The method according to any one of Supplements 1 to 16, wherein the first unit and the second unit are two collocated units in the first node, or the second unit is an individual entity in the first node.
18. The method according to Supplement 1 or 17, wherein a control plane protocol stack of the first unit includes: a physical layer, a MAC layer, an RLC layer, a PDCP layer and an RRC layer.
19. The method according to Supplement 18, wherein the control plane protocol stack of the first unit further includes a NAS layer, which is located above the RRC layer.
20. The method according to any one of Supplements 1 to 19, wherein the first node is a network-controlled repeater (NCR) or a smart repeater (SR) or a reconfigurable intelligent surface (RIS).
21. A setup method for a node, wherein the method includes:
   a network device transmits a message related to setting of a second unit of a first node to a first unit via a signaling procedure between the first unit of the first node and the network device, the first unit of the first node setting the second unit of the first node via the signaling procedure.
22. The method according to Supplement 21, wherein the network device transmits the message related to setting of a second unit of a first node to the first unit via a radio resource control (RRC) procedure between the first unit of the first node and the network device, the first unit of the first node setting the second unit of the first node via the RRC procedure.
23. The method according to Supplement 22, wherein the message related to the setting of the second unit of the first node is an SIB1 message, the network device providing a layer 1 parameter value of the second unit via the SIB 1 message.
24. The method according to Supplement 22, wherein the message related to setting of a second unit of a first node is an RRC setup *(RRCSetup)* message, the RRC setup *(RRCSetup)* message including the related configuration (such as ncr-Config) of the second unit.
25. The method according to Supplement 22, wherein the message related to the setting of the second unit of the first node is an RRC reconfiguration message, the RRC reconfiguration message including related configuration of the second unit.
26. The method according to Supplement 22, wherein the message related to setting of a second unit of a first node is an RRC resume message, the RRC resume message including the related configuration of the second unit.
27. The method according to Supplement 24, 25 or 26, wherein the related configuration of the second unit includes at least one of the following:
   an on-off mode;
   timing information for aligning transmission and/or reception boundaries;
   a beamforming capability;
   power and/or gain control information;
   bandwidth information;
   reference signal configuration for the second unit;
   reference signal transmit power for the second unit; and
   layer 2 and/or layer 3 configuration of the first node.
28. The method according to any one of Supplements 21 to 27, wherein the method further includes:
   the network device receives a capability of the second unit reported by the first unit.
29. The method according to Supplement 28, wherein the network device receives a capability of the second unit reported by the first unit, including:
   the network device transmits a first message to the first unit, the first message being used to inquire about the capability of the second unit;
   the network device receives a second message transmitted by the first unit, the first message including capability information of the second unit.
30. The method according to Supplement 28, wherein the network device receives a capability of the second unit reported by the first unit, including:
   the network device transmits a third message to the first unit, the third message including an IE for inquiring about the capability of the second unit;
   the network device receives a fourth message transmitted by the first unit, the fourth message including an IE for indicating the capability of the second unit.
31. A node, including a memory and a processor, the memory storing a computer program, and the processor being configured to execute the computer program to carry out the method according to any one of the supplements 1 to 20.
32. A network device, including a memory and a processor, the memory storing a computer program, and the processor being configured to execute the computer program to carry out the method according to any one of Supplements 21 to 30.
33. A communication system, including a terminal equipment, a network device and a node, the network device is configured to execute the method according to any one of Supplements 21 to 30, and the node is configured to execute the method according to any one of Supplements 1 to 20.

## Claims

1. An apparatus for configuring a node, configured in a first node, wherein the apparatus comprises:
a first unit configured to configure a second unit of the apparatus via a signaling procedure between the first unit and a network device; and
the second unit configured to forward a signal between a terminal equipment and the network device.

2. The apparatus according to claim 1, wherein the first unit configures the second unit via a radio resource control procedure between the first unit and the network device.

3. The apparatus according to claim 2, wherein that the first unit configures the second unit via a radio resource control (RRC) procedure comprises:
the first unit performs at least one of the following steps when it performs RRC establishment initialization:
applying a default layer 1 parameter value except for a parameter value provided in system information 1 (SIB1) for the second unit;
applying a parameter *timeAlignmentTimerCommon* included in SIB 1 for the second unit; and
when the first unit receives an RRC setup message, performing a configuration procedure for the second unit according to received related configuration of the second unit.

4. The apparatus according to claim 2, wherein that the first unit configures the second unit via the RRC procedure comprises:
the first unit performs at least one of the following steps after cell selection and when T311 timer is running:
applying a default layer 1 parameter value except for a parameter value provided in SIB 1 for the second unit; and
applying a parameter *timeAlignmentTimerCommon* contained in SIB 1 for the second unit.

5. The apparatus according to claim 2, wherein that the first unit configures the second unit via the RRC procedure comprises:
the first unit performs the following step when it receives an RRC reconfiguration message:
performing a configuration procedure for the second unit according to received related configuration of the second unit.

6. The apparatus according to claim 2, wherein that the first unit configures the second unit via the RRC procedure comprises:
the first unit performs at least one of the following steps when it performs RRC connection recovery initialization:
applying a default layer 1 parameter value except for a parameter value provided in SIB 1 for the second unit; and
applying a parameter *timeAlignmentTimerCommon* contained in SIB 1 for the second unit.

7. The apparatus according to claim 2, wherein that the first unit configures the second unit via the RRC procedure comprises:
the first unit performs at least one of the following steps when it receives an RRC resume message:
if the related configuration of the second unit is stored, recovering the related configuration of the second unit from a UE inactive access stratum context;
if the RRC resume message contains the related configuration of the second unit, performing the configuration procedure for the second unit according to the received related configuration of the second unit.

8. The apparatus according to claim 3, wherein the related configuration of the second unit comprises at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

9. The apparatus according to claim 1, wherein,
the first unit further reports a capability of the second unit to the network device.

10. The apparatus according to claim 9, wherein that the first unit reports a capability of the second unit to the network device comprises:
the first unit receives a first message transmitted by the network device, the first message being used to inquire about the capability of the second unit; and
the first unit transmits a second message to the network device, the second message comprising capability information of the second unit.

11. The apparatus according to claim 9, wherein that the first unit reports a capability of the second unit to the network device comprises:
the first unit receives a third message transmitted by the network device, the third message comprising an IE for inquiring about the capability of the second unit; and
the first unit transmits a fourth message to the network device, the fourth message comprising an IE used for indicating the capability of the second unit.

12. The apparatus according to claim 1, wherein,
the second unit starts to forward when at least one of the following conditions is satisfied:
when the first unit receives the RRC setup message and configures the second unit;
access layer security of the first unit being activated;
the first unit receiving an RRC resume message;
the first unit recovering the related configuration of the second unit;
the first unit entering an RRC connected state;
the RRC reconfiguration message received by the first unit comprising the related configuration of the second unit;
the related configuration of the second unit comprising bandwidth configuration; and
the first unit having performed reconfiguration with sync.

13. The apparatus according to claim 12, wherein in a case where the RRC reconfiguration message comprises the related configuration of the second unit or the related configuration of the second unit comprises bandwidth configuration or the first unit has performed reconfiguration with sync, the second unit stops operating first, and then restarts operating according to the RRC reconfiguration message.

14. The apparatus according to claim 1, wherein,
the second unit ceases forwarding in a case where at least one of the following conditions is satisfied:
the first unit entering an RRC idle state;
the RRC reconfiguration message received by the first unit comprising the related configuration of the second unit, or the related configuration of the second unit comprising the bandwidth configuration;
the first unit having performed reconfiguration with sync;
the first unit performing initialization of RRC connection re-establishment; and
an RRC release message received by the first unit comprising suspending configuration.

15. An apparatus for configuring a node, configured in a network device, wherein the apparatus comprises:
a transmitting unit configured to transmit a message related to configuring of a second unit of a first node to a first unit via a signaling procedure between the first unit of the first node and the network device, the first unit of the first node configuring the second unit of the first node via the signaling procedure.

16. The apparatus according to claim 15, wherein the transmitting unit transmits the message related to configuring of a second unit of a first node to the first unit via a radio resource control (RRC) procedure between the first unit of the first node and the network device, the first unit of the first node configuring the second unit of the first node via the RRC procedure.

17. The apparatus according to claim 16, wherein the message related to the configuring of the second unit of the first node is an SIB 1 message, the transmitting unit providing a layer 1 parameter value of the second unit via the SIB1 message.

18. The apparatus according to claim 16, wherein the message related to the configuring of the second unit of the first node is an RRC reconfiguration message, the RRC reconfiguration message comprising related configuration of the second unit.

19. The apparatus according to claim 18, wherein the related configuration of the second unit comprises at least one of the following:
an on-off mode;
timing information for aligning transmission and/or reception boundaries;
a beamforming capability;
power and/or gain control information;
bandwidth information;
reference signal configuration for the second unit;
reference signal transmit power for the second unit; and
layer 2 and/or layer 3 configuration of the first node.

20. A node, comprising a memory and a processor, the memory storing a computer program, wherein the processor is configured to execute the computer program to carry out a method as follows:
configuring a second unit of the first node via a signaling procedure between a first unit of the node and a network device, the second unit being configured to forward a signal between a terminal equipment and the network device.
